# NEUE EUROPÄISCHE PATENTSCHRIFT

(11) **EP 2 982 232 B2**
(45) Veröffentlichungstag und Bekanntmachung des Hinweises auf die Entscheidung über den Einspruch: **12.06.2024**
(45) Hinweis auf die Patenterteilung: 11.07.2018
(21) Anmeldenummer: 15167272.2
(22) Anmeldetag: 12.05.2015
(51) Int. Cl.: A01D 41/127, A01D 43/08

(54) **FELDHÄCKSLER UND BETRIEBSVERFAHREN DAFÜR**
CHAFF CUTTER AND METHOD FOR OPERATING THE SAME
RAMASSEUSE-HACHEUSE ET SON PROCÉDÉ DE FONCTIONNEMENT

(30) Priorität: 04.08.2014 DE 102014011308
(43) Veröffentlichungstag der Anmeldung: 10.02.2016
(73) Patentinhaber: CLAAS Selbstfahrende Erntemaschinen GmbH, 33428 Harsewinkel (DE)
(72) Erfinder: Fischer, Frédéric, 59823 Arnsberg (DE); Bönig Dr., Ingo, 33330 Gütersloh (DE); Kriebel, Bastian, 48155 Münster (DE); Kildeby, Allan, 3060 Espergaerde (DK); Guðmundsson, Hagalín Ásgrímur, 2880 Bagsværd (DK)
(74) Vertreter: Dekker, Lothar Karl Rudolf

(56) Entgegenhaltungen:
- EP-A1- 1 671 530
- EP-A1- 2 232 978
- EP-A1- 2 452 550
- EP-A2- 1 956 361
- EP-A2- 2 570 968
- WO-A1-01/47342
- JP-A- S5 759 143
- US-A- 4 975 863

## Beschreibung

Die vorliegende Erfindung betrifft einen Feldhäcksler mit einer Nachbehandlungseinrichtung sowie ein Betriebsverfahren dafür.

Aus EP 2 452 550 A1 sind ein Feldhäcksler und ein Betriebsverfahren dafür bekannt, bei dem eine Kamera Bilder von gehäckseltem Erntegut erzeugt und eine Bildauswertungseinrichtung den Anteil von Lieschblättern, Stängelstücken und ganzen Maiskörnern im Häckselmaterial beurteilt und anhand der ermittelten Anteile den Betrieb des Häckselwerks zu optimieren versucht. Zu diesem Zweck wird insbesondere anhand des Stängelanteils die Schnittlänge des Ernteguts geregelt, und anhand des Lieschblattanteils wird über die Notwendigkeit des Nachschleifens entschieden. Eine Nachbehandlungseinrichtung wird so angesteuert, dass ein vorgebbarer Anteil von Maiskörnern im Erntegut nicht überschritten wird.

Idealerweise sollten gar keine ganzen Maiskörner im Häckselgut enthalten sein, da diese, wenn das Häckselgut als Tierfutter verwendet wird, von den Tieren nur schlecht aufgenommen und verwertet werden können. Auch bei Verwendung des Häckselguts zur Biogaserzeugung sind intakte Körner unerwünscht. Da intakte Körner und auch grobe Kornbruchstücke nur langsam und unvollständig vergären, bleibt ihr Energiegehalt großenteils ungenutzt. Deswegen sollten bei Häckselgut für die Biogaserzeugung die Körner sogar noch feiner zerkleinert sein als bei Tierfutter.

Durch eine enge Einstellung eines Crackerspalts der Nachbehandlungseinrichtung oder eine hohe Geschwindigkeitsdifferenz zwischen den Crackerspalt begrenzenden Walzen kann zwar der Anteil an intakten Körnern problemlos niedrig gehalten werden, doch liegt auf der Hand, dass umso mehr Antriebsenergie eingesetzt werden muss, je feiner die Körner zerkleinert werden und dass folglich ein optimaler Zerkleinerungsgrad existieren muss, der nicht unterschritten werden sollte, weil dem Energieaufwand für das Zerkleinern keine entsprechende Verbesserung der Energieausbeute bei der Biogaserzeugung gegenübersteht.

Mit dem herkömmlichen Verfahren ist es schwierig, zu beurteilen, ob der für eine gegebene Verwendung des Häckselguts erforderliche Zerkleinerungsgrad erreicht ist, da, wenn dies der Fall ist, die intakten Körner nur einen sehr geringen Anteil an der Gesamtmasse des Häckselguts haben und der Zerkleinerungsgrad der Körner stark variieren kann, ohne dass sich dies in auffälliger Weise auf den Ganzkornanteil auswirkt. Noch schwieriger ist es, den optimalen Zerkleinerungsgrad von einer unnötig feinen Zerkleinerung zu unterscheiden. Gerade dies ist aber für einen kraftstoffsparenden Betrieb des Feldhäckslers notwendig.

Die Druckschrift EP 2 232 978 A1 offenbart einen Feldhäcksler, bei dem das gehäckselte Erntegut durch Walzen geleitet wird, um die Körner aufzubrechen. Der Erntegutstrom wird mit einer Kamera überwacht. Eine Steuereinheit erfasst anhand der Kamerabilder die ganzen und die aufgebrochenen Körner im Erntegutstrom. In Abhängigkeit von dem Verhältnis von ganzen zu aufgebrochenen Körnern wird der Spalt zwischen den Walzen eingestellt.

Aufgabe der Erfindung ist, einen Feldhäcksler bzw. ein Verfahren zum Betreiben eines Feldhäckslers anzugeben, mit denen Häckselgut energieeffizient und in an den jeweiligen Verwendungszweck angepasster Körnung erzeugt werden kann.

Die Aufgabe wird zum einen gelöst durch ein Verfahren zum Betreiben eines Feldhäckslers gemäß dem Anspruch 1.

Mit diesen Mächtigkeitswerten werden wenigstens zwei Datenwerte erhalten, die einen Rückschluss auf den Zerkleinerungsgrad der Körner zulassen. Es ist daher nicht mehr nötig, einen Kornanteil mit Nichtkornanteilen des Häckselguts zu vergleichen, so dass eine genauere, von Störeinflüssen unabhängigere Beurteilung der Häckselqualität möglich ist.

Einer einfachen Ausgestaltung zu Folge kann die Mächtigkeit jeder Fraktion anhand der Zahl der Partikel beurteilt werden, die der betreffenden Fraktion im Sortierschritt c) zugeschlagen worden sind. Ein solches Verfahren erfordert über das Identifizieren und Sortieren der kornartigen Partikel hinaus nur wenig Verarbeitungsaufwand. Da allerdings aus jedem Korn im Zerkleinerer mehrere Bruchstücke entstehen, ist diese Art der Auswertung relativ unempfindlich gegen kleine Schwankungen des Anteils von nicht oder unzureichend zerkleinerten Körnern.

Alternativ können, da beim Sortieren ohnehin Größendaten für jeden Partikel ermittelt worden sind, diese auch herangezogen werden, um das Gewicht eines identifizierten Partikels abzuschätzen und in der Folge die Mächtigkeit jeder Fraktion anhand des Gewichts ihrer Partikel zu beurteilen.

Das Sortieren erfolgt vorzugsweise anhand der in den Bildern sichtbaren Abmessungen der Partikel. Diese können zwar im Einzelfall dadurch verfälscht sein, dass ein kornartiger Partikel zum Teil von anderem Häckselgut verdeckt ist oder dass in Folge von perspektivischer Verkürzung sichtbare und tatsächliche Abmessungen des Partikels nicht übereinstimmen, doch kann dies gegebenenfalls durch eine geeignete Festlegung von Grenzwerten für die Zuordnung zu den verschiedenen Fraktionen berücksichtigt werden.

Diese Grenzwerte sind vorzugsweise so festgelegt, dass eine erste der Größenfraktionen wenigstens überwiegend intakte Körner enthält, während eine zweite Größenfraktion überwiegend Kornbruchstücke enthalten sollte.

Die Abmessungen eines natürlichen Maiskorns sind im Allgemeinen in Richtung der Achse seines Kolbens deutlich kleiner als in radialer Richtung oder in Umfangsrichtung. Daher sollte, egal aus welcher Richtung ein intaktes Maiskorn von der Kamera erfasst wird, mindestens eine der beiden größeren Abmessungen sichtbar sein. Ein kornartiger Partikel kann daher zweckmäßigerweise der zweiten Fraktion zugeschlagen werden, wenn seine größte Abmessung einen vorgegebenen Bruchteil einer größten Abmessung eines intakten Korns unterschreitet.

Ferner sollte ein intaktes Korn, egal aus welcher Perspektive es erfasst wird, in keiner Richtung eine kleinere Abmessung haben, als jene, die der axialen Ausdehnung des Korns entspricht. Daher kann ein kornartiger Partikel auch dann mit Gewissheit der zweiten Fraktion zugeschlagen werden, wenn seine kleinste Abmessung einen vorgegebenen Bruchteil einer kleinsten Abmessung des intakten Korns unterschreitet.

Die ermittelten Mächtigkeiten der Fraktionen werden in einem weiteren Verarbeitungsschritt mit einer Sollverteilung verglichen. Das Ergebnis eines solchen Vergleichs kann einem Fahrer des Feldhäckslers angezeigt werden, um diesen zu veranlassen, wenn nötig Korrekturen an der Einstellung der Nachbehandlungseinrichtung, d.h. an den Drehzahlen oder der Drehzahldifferenz ihrer Walzen vorzunehmen.

Es kann auch aus dem Vergleich eine Empfehlung für eine Einstellung der Nachbehandlungseinrichtung abgeleitet und diese Empfehlung angezeigt werden.

Um den Fahrer des Feldhäckslers zu entlasten, ist es zweckmäßig, dass die Nachbehandlungseinrichtung, insbesondere die Geschwindigkeit der Walzen, automatisch anhand des Vergleichs gesteuert wird.

Die Aufgabe wird ferner gelöst durch ein Computerprogrammprodukt mit Programmcode-Mitteln, die einen Computer befähigen, ein Verfahren wie oben beschrieben auszuführen.

Sie wird ferner gelöst durch einen Feldhäcksler gemäß dem Anspruch 12.

Die Auswertungseinheit kann ferner eingerichtet sein, die ermittelten Mächtigkeiten mit einer Vorgabe zu vergleichen, sei es, um das Ergebnis oder eine darauf basierende Einstellungsempfehlung anzuzeigen oder um selbst die Nachbehandlungseinrichtung anhand des Vergleichsergebnisses anzusteuern.

Eine Benutzerschnittstelle kann dem Fahrer die Möglichkeit bieten, zwischen wenigstens zwei Vorgaben für den Vergleich auszuwählen. Diese Vorgaben können insbesondere für eine Verwendung des Häckselguts in der Biogaserzeugung oder für eine Verwendung als Tierfutter optimiert sein. Der Fahrer muss dann lediglich noch den vorgesehenen Verwendungszweck des Häckselguts kennen, um eine entsprechende Einstellung an der Benutzerschnittstelle vornehmen zu können; eine für den jeweils eingestellten Verwendungszweck passende Körnung des Häckselguts wird dann von der Auswertungseinheit selbsttätig eingestellt.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht eines erfindungsgemäßen Feldhäckslers;
- Fig. 2: eine schematische Darstellung eines von einer Kamera des Feldhäckslers aus Fig. 1 aufgenommenen Bildes des Häckselmaterials; und
- Fig. 3: ein Flussdiagramm eines Arbeitsverfahrens einer Auswertungseinheit des Feldhäckslers.

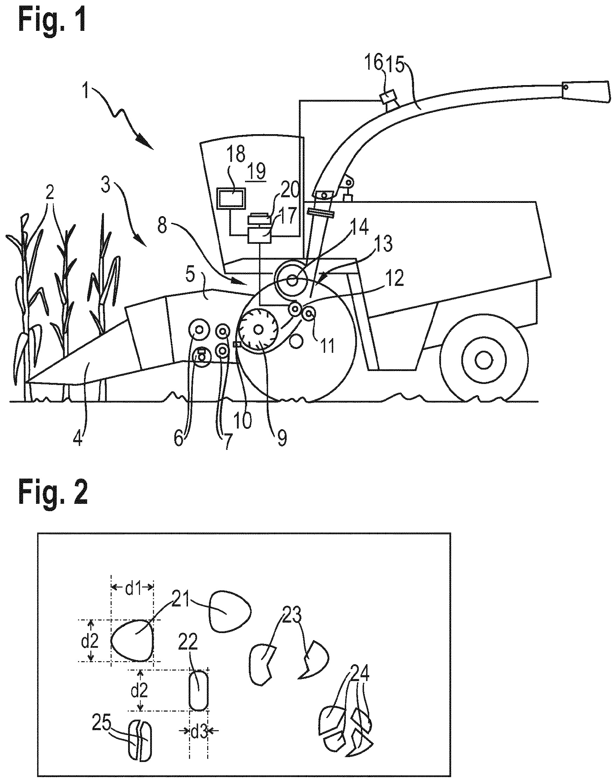

Fig. 1 zeigt einen erfindungsgemäßen Feldhäcksler 1 beim Abernten eines Bestandes von Pflanzen, insbesondere Maispflanzen 2, auf einem Feld. Eine Aufnahmevorrichtung 3 des Feldhäckslers umfasst in an sich bekannter Weise einen in Anpassung an das zu erntende Pflanzenmaterial austauschbaren Erntevorsatz 4 und eine Fördereinrichtung 5 mit mehreren Walzenpaaren 6, 7 die das Erntegut von dem Erntevorsatz 9 übernimmt, um es einem Verarbeitungsaggregat 8 zuzuführen.

Das Verarbeitungsaggregat 8 umfasst eine drehangetriebene Häckseltrommel 9, eine ortsfeste Schneidkante 10, über die das Pflanzenmaterial von dem benachbarten Walzenpaar 7 der Fördereinrichtung 5 hindurch geschoben wird, um durch Zusammenwirken der Schneidkante 10 mit der Häckseltrommel 9 zerkleinert zu werden, eine Nachbehandlungseinrichtung 13, auch als Corn-Cracker bezeichnet, mit einem Paar von Konditionier- oder Crackerwalzen 11, die einen Spalt 12 von verstellbarer Breite, im Folgenden auch als Crackerspalt bezeichnet, begrenzen und mit unterschiedlichen Geschwindigkeiten rotieren, um in dem durch den Spalt 12 hindurchtretenden Materialstrom enthaltene Maiskörner zu zerkleinern, sowie einen Nachbeschleuniger 14, der dem zerkleinerten und in der Nachbehandlungseinrichtung 13 konditionierten Erntematerial die notwendige Geschwindigkeit verleiht, um einen Auswurfkrümmer 15 zu durchlaufen und in ein (nicht dargestelltes) Begleitfahrzeug übergeladen zu werden. An dem Auswurfkrümmer ist eine Kamera 16 angeordnet, um Bilder des durch den Auswurfkrümmer 15 hindurch geförderten Häckselgutes zu erzeugen und an eine Auswertungseinheit 17 zu liefern.

Die Auswertungseinheit 17 ist mit einem Anzeigeschirm 18 in einer Fahrerkabine 19 des Feldhäckslers 1 verbunden, um Auswertungsergebnisse darauf auszugeben. Ferner steuert die Auswertungseinheit 17 ein Stellglied zum Einstellen der Breite des Crackerspalts 12 und/oder der Differenzdrehzahl und/oder Drehzahlniveaus der Walzen 11. Das Einstellen der Breite des Crackerspalts 12 erfolgt nicht erfindungsgemäß.

Die Auswertungseinheit 17 kann gegliedert sein in einen Bildverarbeitungsteil, der unmittelbar an der Kamera 16 angesiedelt ist, um die Entfernung zu minimieren, über die die großen von der Kamera 16 gelieferten Datenmengen übertragen werden müssen, und einen Steuerungsteil, der z.B. nahe zum Anzeigeschirm 18 in der Fahrerkabine 19 angebracht sein kann.

Fig. 2 zeigt in stark schematisierter Form ein von der Kamera 16 geliefertes Bild. Stängel- und Blattbestandteile des Häckselguts sind in Fig. 2 nicht dargestellt, da sie im erfindungsgemäßen Verfahren keine Rolle spielen und von der Auswertungseinheit 17 nicht einzeln identifiziert werden. Kornartige Partikel, d.h. ganze Körner 21, 22 oder Kornbruchstücke 23, 24, 25, können in einem ersten Schritt der Bildverarbeitung durch die Auswertungseinheit 17 anhand ihrer Farbe und ihrer in der Regel scharfkantigen Umrisse von den Stängel- und Blattanteilen unterschieden werden.

Der Platz, den die Abbildung eines Korns 21, 22 oder Kornbruchstücks 23, 24, 25 in dem von der Kamera gelieferten Bild einnimmt, hängt von dem Winkel ab, unter dem sich das Korn oder Kornbruchstück der Kamera 16 darbietet. Die Körner 21 werden von der Kamera 16 aus einer Richtung erfasst, die in etwa der Längsachse des Kolbens entspricht, in dem diese Körner gewachsen sind. Dementsprechend bieten sich die Körner 21 der Kamera 16 mit ihren beiden größten Abmessungen, einer in Radialrichtung des Kolbens gemessenen Abmessung d1, und einer in Umfangsrichtung des Kolbens gemessenen Abmessung d2, dar.

Da ein gespaltenes Korn nicht in zwei zueinander orthogonalen Richtungen so große Abmessungen haben kann wie die für die Körner 21 gemessenen, können die Körner 21 mit Gewissheit als intakt beurteilt werden.

Die Blickrichtung der Kamera 16 auf das Korn 22 entspricht der Radialrichtung des Kolbens, in dem das Korn 22 vorher gesessen hat, so dass die Abmessung d3 des Korns 22 in axialer Richtung des Kolbens sichtbar ist, die deutlich kleiner ist als d1 und d2. Das Korn 22 ist allein anhand seiner im Bild der Kamera 16 sichtbaren Abmessungen nicht sicher zu unterscheiden von Kornbruchstücken 23, die durch Aufbrechen eines Korns in radialer Richtung erhalten sind. Erst wenn die Bruchstücke 23 ihrerseits noch einmal zu Bruchstücken 24 fragmentiert sind, sind deren Abmessungen in zwei Richtungen deutlich kleiner als d1 oder d2, so dass sie als Bruchstücke eindeutig erkennbar sind.

Die Bruchstücke 25 veranschaulichen den recht häufigen Fall, dass ein Korn von den Scherkräften der mit unterschiedlichen Geschwindigkeiten rotierenden Konditionierwalzen 12 in axialer Richtung zerrissen ist. Die jeweils größte Abmessung der beiden Bruchstücke 25 entspricht hier d1 oder d2, doch die dazu orthogonale Abmessung ist deutlich kleiner als d3, so dass die Bruchstücke 25 eindeutig als solche erkennbar sind.

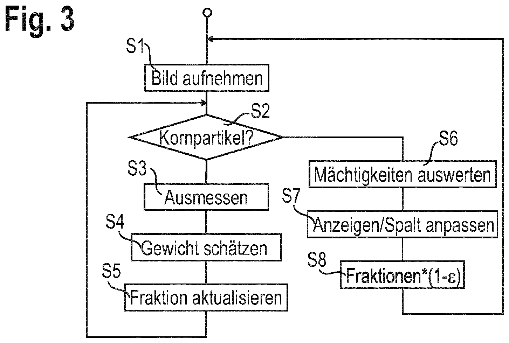

Fig. 3 veranschaulicht ein Arbeitsverfahren der Auswertungseinheit 17 anhand eines Flussdiagramms. Das Verfahren beginnt mit dem Empfang eines Bildes von der Kamera (S1). Das Bild wird auf seiner Gesamtfläche nach Kornpartikeln abgesucht. Wenn in Schritt S2 ein Kornpartikel gefunden worden ist, werden dessen sichtbare Abmessungen in Schritt S3 ermittelt.

Anhand der Abmessungen wird der gefundene Kornpartikel einer Fraktion zugeordnet. Im einfachsten Fall geschieht dies, indem die größte im Bild gefundene Abmessung des Kornpartikels mit einem Grenzwert, zum Beispiel d3 oder einem Wert zwischen d1 und d3, verglichen wird und der Kornpartikel bei Überschreitung des Grenzwerts einer grobkörnigen Fraktion, andernfalls einer feinkörnigen Fraktion, zugewiesen und ein Partikelzählwert der entsprechenden Fraktion inkrementiert wird. Denkbar ist auch, anhand der ermittelten Abmessungen das Gewicht des Kornpartikels zu schätzen (S4) und einen für die Mächtigkeit der betreffenden Fraktion repräsentativen Wert in Schritt S5 um dieses geschätzte Gewicht zu inkrementieren.

Eine weitere Möglichkeit ist, anhand der Messungen zunächst das Gewicht des Kornpartikels zu schätzen und anhand eines Vergleichs dieses Schätzwerts mit einem Grenzwert den Partikel der grob- oder feinkörnigen Fraktion zuzuweisen.

Eine Schätzung des Gewichts kann einem Kornpartikel abhängig von seinen zwei gemessenen Abmessungen eine dritte Abmessung in Blickrichtung der Kamera zuordnen und dessen statistische Abhängigkeit von den zwei anderen Abmessungen bei der Gewichtsberechnung berücksichtigen. Einer vereinfachten Ausgestaltung zufolge kann die dritte Abmessung bei allen Kornpartikeln als identisch angenommen werden; die Abschätzung des Gesamtgewichts einer Partikelfraktion läuft dann darauf hinaus, die Flächenausdehnungen der Abbildungen aller Kornpartikel einer Fraktion aufzuaddieren.

Natürlich kann als Obergrenze der feinkörnigen Fraktion auch ein Grenzwert festgelegt werden, der niedriger ist als die Untergrenze der grobkörnigen Fraktion. So kann sichergestellt werden, dass Kornartige Partikel, die aufgrund ihrer Größe weder mit Gewissheit als intaktes Korn noch als Kornbruchstück identifizierbar sind, weder der feinkörnigen noch der grobkörnigen Fraktion zugewiesen werden. Derartige Partikel können auch auf eine oder mehrere Fraktionen mit einer intermediären Korngröße verteilt werden.

Die Schritte S3 bis S5 werden wiederholt, bis sämtliche in dem Bild identifizierbaren Kornpartikel ausgewertet sind, dann verzweigt das Verfahren nach Schritt S6, um die erhaltenen Mächtigkeiten der Fraktionen auszuwerten.

Eine solche Auswertung kann im einfachsten Fall darin bestehen, dass die Werte grafisch oder numerisch auf dem Anzeigeschirm 18 ausgegeben werden und dem Fahrer des Feldhäckslers 1 anheimgestellt ist, ob er in Anbetracht der angezeigten Werte den Crackerspalt anpasst oder nicht. Um dem Fahrer diese Aufgabe zu erleichtern, kann der Grenzwert oder der Satz von Grenzwerten, anhand dessen die Zuordnung der Kornpartikel zu den Fraktionen vorgenommen worden ist, so gewählt sein, dass bei korrekter Einstellung des Crackerspalts 12 fein- und grobkörnige Fraktionen gleich mächtig sind. So kann der Fahrer anhand eines Größenvergleichs von auf dem Anzeigeschirm 18 dargestellten, der Mächtigkeit der Fraktionen entsprechender Histogrammbalken schnell und einfach überprüfen, ob die Einstellung des Crackerspalts korrekt ist oder einer Anpassung bedarf. Das Einstellen der Breite des Crackerspalts 12 erfolgt nicht erfindungsgemäß.

An einer Benutzerschnittstelle 20 der Fahrerkabine 19 kann dem Fahrer die Möglichkeit geboten sein, zu Beginn eines Ernteeinsatzes anzugeben, ob die zu erntenden Pflanzen 2 für Biogaserzeugung oder für Viehfutter vorgesehen sind, woraufhin die Auswertungseinheit 17 jeweils entsprechend dieser zur Bestimmung unter mehreren gespeicherten Grenzwerten bzw. Grenzwertsätzen den geeigneten auswählt.

Natürlich kann der bei der Zuordnung zu den Fraktionen verwendete Grenzwert auch unabhängig vom Verwendungszweck des Ernteguts vorgegeben sein, und stattdessen ist das anzustrebende Mächtigkeitsverhältnis der Fraktionen in Abhängigkeit vom Verwendungszweck vorgegeben.

Anstatt das Auswertungsergebnis lediglich anzuzeigen, kann die Auswertungseinheit 17 einer komfortableren Ausgestaltung zu Folge anhand dieses Ergebnisses auch selbst in den Betrieb des Crackerspalts eingreifen und in Schritt S7 dessen Spaltbreite verringern, wenn die Mächtigkeit der grobkörnigen Fraktion im Verhältnis zur feinkörnigen höher ist als erwünscht, oder umgekehrt die Spaltbreite heraufsetzen, wenn die feinkörnige Fraktion zu mächtig ist. In diesem Fall kann die Kontrolle des Fahrers für den Häckselvorgang sich darauf beschränken, zum Beginn den Verwendungszweck des Häckselgutes zu spezifizieren; eine Steuerung des Crackerspalts 12, durch die die Körner mit der benötigten Feinheit zerkleinert werden, aber kein Kraftstoff für unnötig feine Zerkleinerung vergeudet wird, erfolgt vollautomatisch durch die Auswertung. Das Einstellen der Breite des Crackerspalts 12 erfolgt nicht erfindungsgemäß.

In Schritt S8 werden die Mächtigkeitswerte der Fraktionen mit einem Vergessensfaktor (1-ε) von knapp unter 1 multipliziert werden. Indem dies regelmäßig, etwa wie hier einmal pro Bild, geschieht, kann ein Divergieren der Mächtigkeitswerte verhindert und der Einfluss von vor längerer Zeit aufgenommenen Bildern im Laufe der Zeit immer geringer gemacht werden.

### Bezugszeichen

- 1: Feldhäcksler
- 2: Maispflanze
- 3: Aufnahmevorrichtung
- 4: Erntevorsatz
- 5: Fördereinrichtung
- 6: Walzenpaar
- 7: Walzenpaar
- 8: Verarbeitungsaggregat
- 9: Häckseltrommel
- 10: Schneidkante
- 11: Crackerwalze
- 12: Crackerspalt
- 13: Nachbehandlungseinrichtung
- 14: Nachbeschleuniger
- 15: Auswurfkrümmer
- 16: Kamera
- 17: Auswertungseinheit
- 18: Anzeigeschirm
- 19: Fahrerkabine
- 20: Benutzerschnittstelle
- 21: Korn
- 22: Korn
- 23: Kornbruchstück
- 24: Kornbruchstück
- 25: Kornbruchstück

## Patentansprüche

1. Verfahren zum Betreiben eines Feldhäckslers (1) mit den Schritten
a) Aufnehmen (S1) von Bildern von im Feldhäcksler (1) erzeugtem Häckselgut mit einer Kamera (16),
b) Identifizieren (S2) von Abbildungen kornartiger Partikel (22-25) in den Bildern,
c) Sortieren der Abbildungen der kornartigen Partikel (22-25) in wenigstens zwei Größenfraktionen (S3-S5),
d) Ermitteln (S6) der Mächtigkeit der Größenfraktionen,
wobei die ermittelten Mächtigkeiten mit einer Sollverteilung verglichen werden, und dass aus dem Vergleich eine Drehzahl wenigstens einer den Crackerspalt (12) begrenzenden Walze (11) oder eine Drehzahldifferenz zwischen zwei einer den Crackerspalt (12) begrenzenden Walzen (11) abgeleitet wird.

2. Verfahren nach Anspruch 1, bei dem in Schritt d) die Mächtigkeit jeder Fraktion anhand der Zahl ihrer Partikel beurteilt wird.

3. Verfahren nach Anspruch 1, bei dem in Schritt d) die Mächtigkeit jeder Fraktion anhand des Gewichts ihrer Partikel beurteilt wird.

4. Verfahren nach einem der vorhergehenden Ansprüche, bei dem das Sortieren anhand der in den Bildern sichtbaren Abmessungen (d1-d3) der Partikel (22-25) erfolgt.

5. Verfahren nach einem der vorhergehenden Ansprüche, bei dem eine erste der Größenfraktionen so definiert ist, dass sie wenigstens überwiegend intakte Körner enthält, und eine zweite Größenfraktion so definiert ist, dass sie wenigstens überwiegend Kornbruchstücke enthält.

6. Verfahren nach Anspruch 5, bei dem ein kornartiger Partikel (22-25) der zweiten Fraktion zugeschlagen wird, wenn seine größte Abmessung einen vorgegebenen Bruchteil einer größten Abmessung (d1) eines intakten Korns (21) unterschreitet.

7. Verfahren nach Anspruch 5, bei dem ein kornartiger Partikel der zweiten Fraktion zugeschlagen wird, wenn seine kleinste Abmessung einen vorgegebenen Bruchteil einer kleinsten Abmessung (d3) eines intakten Korns (22) unterschreitet.

8. Verfahren nach einem der vorangehenden Ansprüche, bei dem aus dem Vergleich eine Einstellempfehlung für eine Nachbehandlungseinrichtung (13) abgeleitet und angezeigt (S7) wird.

9. Verfahren nach einem der vorangehenden Ansprüche, bei dem eine Nachbehandlungseinrichtung (13) anhand des Vergleichs gesteuert wird (S7).

10. Verfahren nach einem der vorangehenden Ansprüche, bei dem aus dem Vergleich eine Sollbreite eines Crackerspalts (12) der Nachbehandlungseinrichtung (13 abgeleitet wird.

11. Computerprogramm-Produkt mit Programmcode-Mitteln, die einen Computer befähigen, das Verfahren nach einem der vorhergehenden Ansprüche auszuführen.

12. Feldhäcksler mit einer Nachbehandlungseinrichtung (13) zum Anschlagen von in Häckselgut enthaltenen Körnern, einer Kamera (16) zum Aufnehmen von Bildern des Häckselguts und einer Auswertungseinheit (17), die eingerichtet ist, kornartige Partikel (22-25) in den Bildern zu identifizieren,
**dadurch gekennzeichnet, dass**
die Auswertungseinheit (17) zudem dazu eingerichtet ist, die kornartigen Partikel (22-25) in wenigstens zwei Größenfraktionen zu sortieren und die Mächtigkeit der Grö-ßenfraktionen zu ermitteln, die ermittelten Mächtigkeiten mit einer Sollverteilung zu vergleichen und aus dem Vergleich eine Drehzahl wenigstens einer den Crackerspalt (12) begrenzenden Walze (11) oder eine Drehzahldifferenz zwischen zwei einer den Crackerspalt (12) begrenzenden Walzen (11) abzuleiten.

13. Feldhäcksler nach Anspruch 12, **dadurch gekennzeichnet, dass** die Auswertungseinheit (17) eingerichtet ist, die ermittelten Mächtigkeiten mit einer Vorgabe zu vergleichen.

14. Feldhäcksler nach Anspruch 13, **gekennzeichnet durch** eine Benutzerschnittstelle (20) zum Auswählen zwischen wenigstens zwei Vorgaben.

## Claims

1. Method for operating a forage harvester (1) with the steps:
a) taking (S1) photographs of chopped material produced in the forage harvester (1) with a camera (16),
b) identifying (S2) images of grain-like particles (22-25) in the photographs,
c) sorting the images of the grain-like particles (22-25) into at least two size fractions (S3-S5),
d) determining (S6) the magnitude of the size fractions,
wherein the determined magnitudes are compared with a nominal distribution, and, from the comparison, a rotational speed of at least one roller (11) delimiting the cracker gap (12) or a difference in rotational speed between two rollers (11) delimiting the cracker gap (12) is deduced.

2. Method according to claim 1, in which in step d) the magnitude of each fraction is assessed on the basis of the number of its particles.

3. Method according to claim 1, in which in step d) the magnitude of each fraction is assessed on the basis of the weight of its particles.

4. Method according to one of the preceding claims, in which the sorting is carried out on the basis of the dimensions (d1-d3) of the particles (22-25) visible in the photographs.

5. Method according to one of the preceding claims, in which a first of the size fractions is defined such that it contains at least predominantly intact grains, and a second size fraction is defined such that it contains at least predominantly grain fragments.

6. Method according to claim 5, in which a grain-like particle (22-25) is allocated to the second fraction when its largest dimension falls below a specified fractional amount of a largest dimension (d1) of an intact grain (21).

7. Method according to claim 5, in which a grain-like particle is allocated to the second fraction when its smallest dimension falls below a specified fractional amount of a smallest dimension (d3) of an intact grain (22).

8. Method according to one of the preceding claims, in which a recommended setting for an aftertreatment device (13) is deduced from the comparison and displayed (S7).

9. Method according to one of the preceding claims, in which an aftertreatment device (13) is controlled (S7) on the basis of the comparison.

10. Method according to one of the preceding claims, in which, from the comparison, a nominal width of a cracker gap (12) of the aftertreatment device (13) is deduced.

11. Computer program product with program code means which enable a computer to carry out the method according to one of the preceding claims.

12. Forage harvester with an aftertreatment device (13) for striking grains contained in chopped material, a camera (16) for taking photographs of the chopped material and an evaluation unit (17) which is equipped for identifying grain-like particles (22-25) in the photographs,
**characterized in that**
the evaluation unit (17) is in addition equipped for sorting the grain-like particles (22-25) into at least two size fractions and determining the magnitude of the size fractions, comparing the determined magnitudes with a nominal distribution and, from the comparison, deducing a rotational speed of at least one roller (11) delimiting the cracker gap (12) or a difference in rotational speed between two rollers (11) delimiting the cracker gap (12).

13. Forage harvester according to claim 12, **characterized in that** the evaluation unit (17) is equipped for comparing the determined magnitudes with a standard value.

14. Forage harvester according to claim 13, **characterized by** a user interface (20) for selecting between at least two standard values.

## Revendications

1. Procédé d'exploitation d'une ensileuse (1) comprenant les étapes consistant à
a) prendre (S1), avec une caméra (16), des vues de produit haché produit dans l'ensileuse (1),
b) identifier (S2), sur les vues, des images de particules en forme de grains (22-25),
c) trier les images des particules en forme de grains (22-25) en au moins deux fractions de taille (S3-S5),
d) déterminer (S6) la cardinalité des fractions de taille,
dans lequel les cardinalités déterminées sont comparées à une distribution de consigne, et qu'à partir de la comparaison est déduite une vitesse de rotation au moins d'un rouleau (11) délimitant l'interstice d'éclateur (12) ou une différence de vitesse de rotation entre deux rouleaux (11) délimitant l'interstice d'éclateur (12).

2. Procédé selon la revendication 1, dans lequel, à l'étape d), la cardinalité de chaque fraction est jugée sur la base du nombre de ses particules.

3. Procédé selon la revendication 1, dans lequel, à l'étape d), la cardinalité de chaque fraction est jugée sur la base du poids de ses particules.

4. Procédé selon une des revendications précédentes, dans lequel le tri s'effectue sur la base des dimensions (d1-d3), visibles sur les vues, des particules (22-25).

5. Procédé selon une des revendications précédentes, dans lequel une première des fractions de taille est définie de façon à contenir au moins majoritairement des grains intacts, et une seconde fraction de taille est définie de façon à contenir au moins majoritairement des fragments de grains.

6. Procédé selon la revendication 5, dans lequel une particule en forme de grain (22-25) est attribuée à la seconde fraction si sa plus grande dimension est inférieure à un pourcentage prédéfini d'une plus grande dimension (d1) d'un grain intact (21) .

7. Procédé selon la revendication 5, dans lequel une particule en forme de grain est attribuée à la seconde fraction si sa plus petite dimension est inférieure à un pourcentage prédéfini d'une plus petite dimension (d3) d'un grain intact (22).

8. Procédé selon une des revendications précédentes, dans lequel une recommandation de réglage pour un équipement de post-traitement (13) est déduite de la comparaison et affichée (S7).

9. Procédé selon une des revendications précédentes, dans lequel un équipement de post-traitement (13) est commandé (S7) sur la base de la comparaison.

10. Procédé selon une des revendications précédentes, dans lequel à partir de la comparaison est déduite une largeur de consigne d'un interstice d'éclateur (12) de l'équipement de post-traitement (13).

11. Produit de programme informatique comprenant des moyens de code de programme qui permettent à un ordinateur de mettre en œuvre le procédé selon une des revendications précédentes.

12. Ensileuse comprenant un équipement de post-traitement (13) pour battre des grains contenus dans du produit haché, une caméra (16) pour prendre des vues du produit haché, et une unité d'analyse (17) qui est agencée pour identifier des particules en forme de grains (22-25) sur les vues, **caractérisée en ce que** l'unité d'analyse (17) est également agencée pour trier les particules en forme de grains (22-25) en au moins deux fractions de taille et pour déterminer la cardinalité des fractions de taille, pour comparer les cardinalités déterminées avec une distribution de consigne et pour déduire de la comparaison une vitesse de rotation au moins d'un rouleau (11) délimitant l'interstice d'éclateur (12) ou une différence de vitesse de rotation entre deux rouleaux (11) délimitant l'interstice d'éclateur (12).

13. Ensileuse selon la revendication 12, **caractérisée en ce que** l'unité d'analyse (17) est agencée pour comparer les cardinalités déterminées avec une prescription.

14. Ensileuse selon la revendication 13, **caractérisée par** une interface utilisateur (20) pour choisir entre au moins deux prescriptions.
